# EUROPEAN PATENT APPLICATION

(11) **EP 1 914 484 A2**
(43) Date of publication of application: **23.04.2008**
(21) Application number: 07019417.0
(22) Date of filing: 04.10.2007
(51) Int. Cl.: F24F 13/32

(54) **Fixing method and fixing apparatus**

(30) Priority: 17.10.2006 IT mo20060334
(71) Applicant: VECAM-CO S.P.A., 35033 Bresseo di Teolo (PD) (IT)
(72) Inventor: Cappellari, Dino, 35030 Rubano (PD) (IT)
(74) Representative: Feltrinelli, Secondo Andrea

(57) **Abstract**

The fixing method suitable for fixing supporting brackets (3) of equipments to a wall (4) comprises positioning said brackets (3) on guide means (2, 7) obtaining positioned brackets (3); resting said guide means (2, 7) and said brackets (3) positioned on said wall (4); fixing said brackets (3) positioned onto said wall (4) with fixing elements (13), after said fixing being provided removing said guide means (2, 7) from said brackets (3).

## Description

The invention refers to a fixing method and a fixing apparatus, particularly suitable for fixing equipment on walls and more specifically exchanger units for air conditioning systems.

It is common knowledge that the heat exchanger units which are used in air conditioning systems and which feed the diffusers mounted in rooms where people stay must be positioned and fixed on the outside of the buildings or in positions that communicate directly with the outside.

Quite often, due to the particular shape of the buildings, these exchangers have to be fixed on the outside walls of buildings or on walls which bound balconies or windows and which, in all cases, face the outside of a building so the heat exchange is able to take place between the hot and cold air in the exchanger.

Strong L shaped brackets are used to fix these exchangers on external walls, one pair of brackets normally sufficing, fixed directly on the walls or on sliding guides which are, in turn, fixed to the walls by means of inserts.

These brackets have seats for inserting fastening screws to them of the exchangers (or other equipment) and which are intended to engage in the threaded holes prepared for this purpose and obtained in the bottom side of the exchangers but sometimes even on the back of them.

The mounting of these pairs of brackets do have some drawbacks.

One first drawback is that often the job of mounting, and related operations, have to be done at quite a height.

One of the jobs to carry out for mounting these pairs of brackets is the direct measuring on walls of the distances between the brackets of a pair, so that the fastening screws of the brackets on the walls are accurately aligned with the corresponding threaded holes obtained on purpose in the body of the exchangers to ensure their safe and firm fixing on both brackets with absolutely no danger of falling. Another job is to make accurate holes in the walls for inserting the constraining inserts in which the screws are to be engaged which are tightened passing through special holes obtained in each bracket so it can be fixed to the walls.

In this case too maximum precision is required in aligning the holes obtained in the brackets with the holes drilled in the walls to match exactly.

This job is also required if the two brackets have to engage with the guides which, in this case, have to be fixed firmly, in turn, to the walls so they can support the brackets. When the guides are fixed to the walls, the brackets are placed in these guides, making them slide along until the required positions are reached and then locked with special bolts in these positions.

In both cases it is necessary to check the horizontal position of the resting surface defined by the pair of brackets utilising a measuring instrument such as, e.g., a spirit level, as well as the symmetry in relation to a central symmetrical surface placed between the pair of brackets so that the weight of the exchangers to support is divided equally on both.

Another drawback is that the preparation work for mounting the brackets requires at least two people and more precisely, one to hold the brackets and another to mark the points on the walls where the holes need to be drilled for inserting the fixing inserts.

Another drawback is that when the brackets are mounted on the guides, the latter remain fastened to the walls after the exchangers have been installed and this calls for an additional piece - besides the brackets - for fixing.

Yet another drawback is that the jobs to carry out to fasten the supports for exchangers on the walls are extremely difficult and awkwardness especially when, as mentioned earlier, they have to be done at quite a height from the ground which can sometimes call for equipments for lifting the people up which, in raised position, are subject to swinging and have a very small surface on which to stand : this makes it very difficult to ensure the precision described previously.

One object of the invention is to improve the state of the art.

Another object of the invention is to perfect a fixing method and a fixing apparatus which permit to fix the fixing brackets of equipments on walls, such as exchangers of air conditioning systems, quickly and simply even if these brackets have to be fixed at high altitudes from the ground and in difficult working conditions.

Another object of the invention is to make a fixing method and a fixing apparatus which is economical and partly reusable for creating other supports.

According to one aspect of the invention a fixing method is provided that is suitable for fixing supporting brackets of equipments to a wall comprising positioning said brackets on guide means obtaining positioned brackets; resting said guide means and said brackets positioned on said wall; fixing said brackets positioned onto said wall with fixing elements, characterised by the fact that after said fixing, said guide means are to be removed from said brackets.

According to another aspect of the invention a fixing apparatus is provided suitable for fixing the supporting brackets of equipments to a wall, comprising: guide means approachable to said wall; at least one pair of supporting brackets of said equipments, equipped with sliding coupling means with said guide means and fixable to said wall in pre-established positions, characterised by the fact that said sliding coupling means are shaped in such a way as to allow uncoupling between said guide means and said brackets when the latter are fixed to said wall.

Therefore, a first advantage of the fixing method and fixing apparatus is to achieve a particularly easy, precise fixing and suitable for supporting equipments, such as exchanger units for air conditioning systems, but also for supporting any type of equipment that has to be fixed to a wall.

Another advantage is that one part of the fixing apparatus can be recovered and then used again for other fixings.

Further characteristics and advantages of the invention will appear more evident from the description of an embodiment of a fixing apparatus, illustrated indicatively by way of non limiting example, in the attached drawings wherein:
Figure 1 is a perspective view of a fixing apparatus in a position approached to a wall, particularly suitable for fixing equipments to walls such as exchanger units for air conditioning systems;
Figure 2 is a view on enlarged scale of an end of a bracket, mounted sliding on guide means and which can be positioned on this with positioning means;
Figure 3 is a perspective view of guide means for supporting brackets, comprising bracket positioning means;
Figure 4 is an interrupted perspective view on enlarged scale of one end of the guide means illustrated in Figure 3.

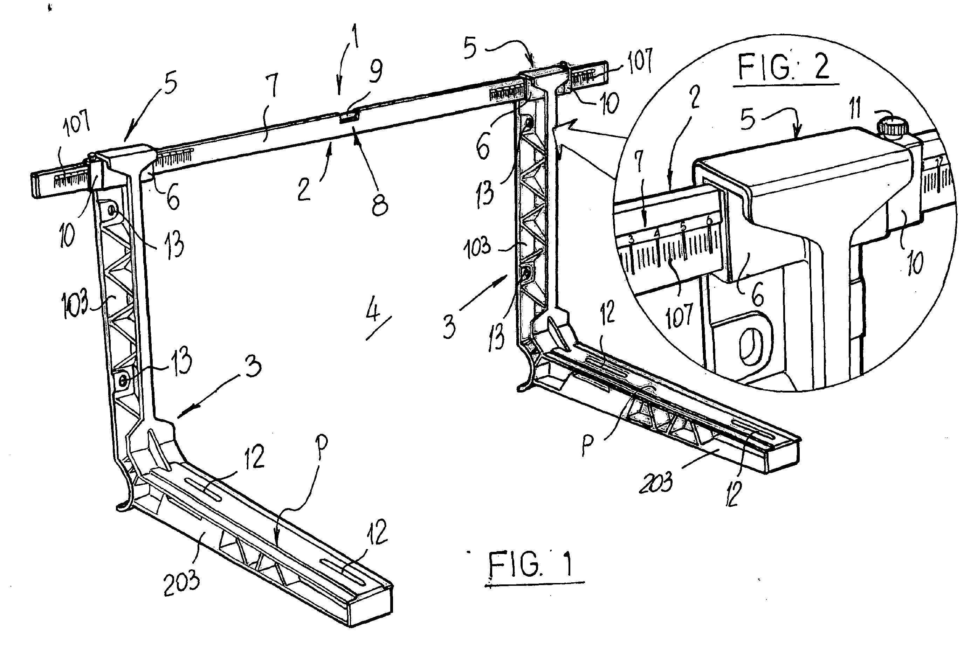

With reference to Figure 1, it can be seen that the fixing apparatus, globally indicated by 1, comprises guide means 2 on which "L" shaped brackets 3 can be mounted and defining a resting surface "P" between two portions intended to be facing outside, parallel with one another and substantially perpendicular to a wall 4 onto which the brackets 3 have to be fixed at predefined distances.

Each of the brackets 3 comprises a first segment 103 and a second segment 203 connected together at right angles at converging ends.

The first segment 103 is intended to go against the wall 4 when the bracket 3 is fixed to it while the segment 203 defines, as already mentioned, the cantilevered resting surface "P" together with a parallel and identical bracket 3 also mounted on the guide means 2.

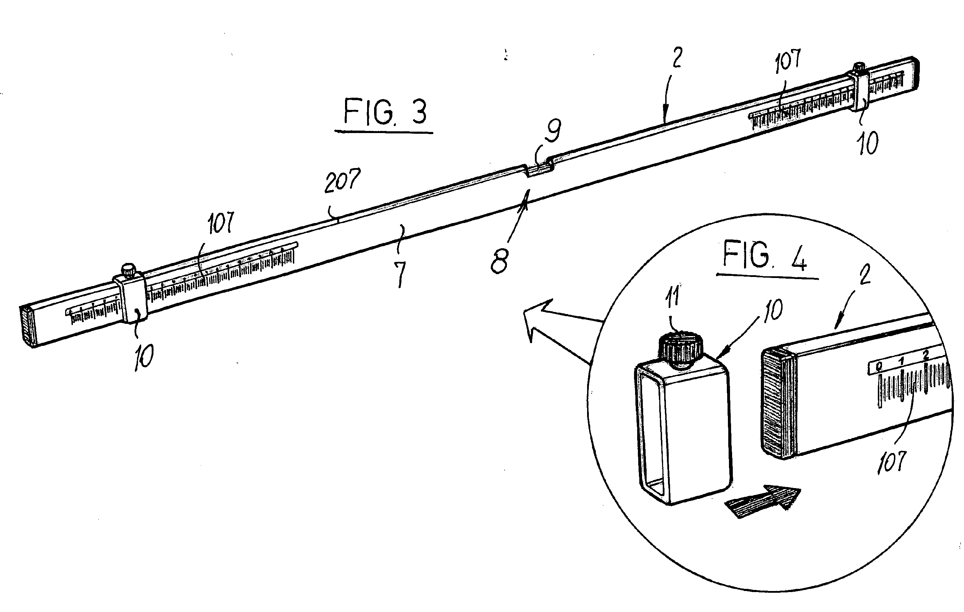

The first segment 103, at one end 5 opposite the end which joins it to the second segment 203, shapes a sleeve 6 inside which the guide means 2 are insertable in a sliding manner, as can be seen in detail in Figure 1 and in Figure 2.

Furthermore, to prevent the guide means 2 from rotating around their own longitudinal axis, the cross section of the sleeve 6 is quadrangular and the cross section of the guide means 2 is also quadrangular and such to engage the axial cavity of the sleeves 6 and allow just one degree of freedom of movement between the latter and the brackets 3, i.e. a longitudinal sliding movement along the guide means 2.

It is obvious that the sections of the guide means 2 and of the sleeves 6 are not limited to being quadrangular; in fact they can be of different polygonal profiles provided they can be coupled together to allow just one degree of freedom between them.

The guide means 2 comprise a rectilinear bar 7 that has, at its opposite ends, two respective graduated portions 107 on which two reference indicators 10 can be mounted in a sliding manner, equipped with a screw element 11 intended to lock or release their sliding along the graduated portions 107 of the bar 7.

In addition, the bar 7 also comprises a measuring device 8 to measure the horizontal position of the bar 7 when mounting the brackets 3 on the wall 4 and comprising, e.g. a spirit level 9 which is mounted in a centred position on one side 207 of the bar 7 intended to face upwards when assembling the brackets 3.

The latter have usual slots 12 and holes 13 for the passage of bolts and/or screws provided both for fixing the brackets to the wall 4 and for fixing an apparatus, e.g. an exchanger for an air conditioning system, on the resting surface "P".

According to the fixing method, at least one pair of brackets 3 are arranged on the bar 7, making the latter slide inside the sleeves 6.

The indicators 10 are then positioned along the graduated portions 107 so they are symmetrical with respect to the centre of the bar 7 and at a reciprocal distance such to allow the alignment between the slots 12 and the threaded holes that are conventionally provided in the bodies of the exchangers.

When this positioning has been completed, the indicators 10 are locked on the bar 7 by means of the respective screw elements 11.

The brackets 3 are then made to slide along the bar 7 until the sleeves 6 go against the locked indicators 10 and, as a result, the brackets 3 are positioned at the set wanted distance.

Now the brackets 3 and the bar 7 rest on the wall 4 they are to be mounted on and the points are marked by which the holes have to be made for introducing the fixing inserts that will engage with the bolts or the fastening screws of the brackets 3 which are inserted in the holes 13 provided in them.

Once the screws or the bolts are screwed right down into the corresponding inserts and, as a result, the brackets 3 are fixed to the wall 4, the screw elements 11 of the indicators 10 are loosened and then pulled off the bar 7.

This too is pulled out of the sleeves 6 and recovered together with the indicators 10 for using them again.

## Claims

1. Fixing method suitable for fixing supporting brackets (3) of equipments to a wall (4) comprising : positioning said brackets (3) on guide means (2, 7) obtaining positioned brackets (3); resting said guide means (2, 7) and said brackets (3) positioned on said wall (4); fixing said brackets (3) positioned onto said wall (4), **characterised by** the fact that after said fixing, said guide means (2, 7) are to be removed from said brackets (3).

2. Method according to claim 1, wherein said positioning comprises attaching said brackets (3) onto said guide means (2, 7) in a sliding manner with sliding means (6) ; defining fixing positions of said brackets (3) onto said guide means (2, 7) with indicator elements (10) of said fixing positions mounted sliding and lockable onto said guide means (2, 7); making said brackets (3) slide onto said guide means (2, 7) until they rest against said fixed indicator means (10).

3. Method according to claim 1 or 2, wherein said removing comprises releasing said indicator means (10) and remove them from said guide means (2, 7).

4. Method according to any of the claims from 1 to 3, wherein said resting comprises resting said guide means (2, 7) according to a supporting surface (P) defined by spirit level means (8) attached onto said guide means (2, 7).

5. Method according to any of the claims from 1 to 4 wherein said sliding means comprise : sleeve means (6) defined in said brackets (3) and having an axial cavity intended to receive said guide means (2, 7) in a sliding manner.

6. Method according to any of the claims from 1 to 5, wherein said cavity and said guide means (2, 7) have respective geometric profiles which can be coupled together so as to allow just one degree of freedom.

7. Method according to any of the claims from 1 to 6, wherein said guide means comprise at least one straight bar (7) which can be inserted sliding into said sleeve means (6).

8. Fixing apparatus (1), suitable for fixing supporting brackets (3) of equipments to a wall (4), comprising: guide means (2, 7) approachable to said wall (4); at least one pair of supporting brackets (3) of said equipments, equipped with sliding coupling means (6) with said guide means (2, 7) and fixable to said wall (4) in pre-established positions, **characterised by** the fact that said sliding coupling means (6) are shaped in such a way as to allow uncoupling between said guide means (2, 7) and said brackets (3) when the latter are fixed to said wall (4).

9. Apparatus according to claim 8, wherein said guide means comprise at least one bar (7).

10. Apparatus according to claim 9, wherein said bar is straight (7) and has a cross section with polygonal profile.

11. Apparatus according to any of the claims from 8 to 10, wherein said coupling means comprise a sleeve (6) defined in each bracket (3) and having an axial cavity with a perimeter following said polygonal profile and intended to receive said straight bar (7) in a sliding manner.

12. Apparatus according to any of the claims from 8 to 11, wherein between said straight bar (7) and said sleeve (6) just one degree of freedom is defined.

13. Apparatus according to any of the claims from 8 to 12, wherein said bar (7) has graduated portions (107) at least at opposite ends.

14. Apparatus according to any of the claims from 8 to 13, wherein said bar (7) is equipped with position indicator elements (10) mounted sliding onto the latter and equipped with locking means (11) for locking the sliding in pre-established positions.

15. Apparatus according to any of the claims from 8 to 14, wherein said indicator elements comprise a pair of ring-shaped elements (10) having the section following said polygonal profile and engageable on said bar (7) in a sliding manner.

16. Apparatus according to any of the claims from 8 to 15, wherein said locking means comprise at least one screw (11) screwable into a corresponding threaded hole obtained crosswise into each of said ring-shaped elements (10) against said bar (7) or unscrewable away from this.

17. Apparatus according to any of the claims from 8 to 16 wherein said ring-shaped elements (10) are intended to slide along said graduated portions (107).

18. Apparatus according to any of the claims from 8 to 17 wherein said guide means (2, 7) comprise further control means (8) of the lying position according to a pre-established surface (P).

19. Apparatus according to claim 18 wherein said control means comprise at least one spirit level (9).
